# EUROPEAN PATENT APPLICATION

(11) **EP 4 344 288 A1**
(43) Date of publication of application: **27.03.2024**
(21) Application number: 22810489.9
(22) Date of filing: 23.05.2022
(51) Int. Cl.: H04W 24/04

(54) **COMMUNICATION METHOD, COMMUNICATION APPARATUS AND COMMUNICATION SYSTEM**

(30) Priority: 24.05.2021 CN 202110564861
(71) Applicant: Huawei Technologies Co., Ltd., Longgang Shenzhen, Guangdong 518129 (CN)
(72) Inventor: QIU, Changfeng, Shenzhen, Guangdong 518129 (CN)
(74) Representative: Huawei European IPR
(86) International application number: PCT/CN2022/094338
(87) International publication number: WO 2022/247764

(57) **Abstract**

Embodiments of this application disclose a communication method, a communication apparatus, and a communication system, to improve detection accuracy of detecting a faulty base station. The method in embodiments of this application includes: When a first network device needs to detect a faulty network device, the first network device may indicate a second network device to send an out-of-synchronization detection sequence on a downlink traffic channel, and indicate a third network device adjacent to the second network device to detect the out-of-synchronization detection sequence. If the out-of-synchronization detection sequence is detected, it indicates that the second network device and the third network device are out of synchronization, and the first network device may determine a faulty network device based on a detection result of the third network device.

## Description

This application claims priority to Chinese Patent Application No. 202110564861.2, filed with the China National Intellectual Property Administration on May 24, 2021 and entitled "COMMUNICATION METHOD, COMMUNICATION APPARATUS, AND COMMUNICATION SYSTEM", which is incorporated herein by reference in its entirety.

### TECHNICAL FIELD

Embodiments of this application relate to the communication field, and in particular, to a communication method, a communication apparatus, and a communication system.

### BACKGROUND

A time division duplex (time division duplex, TDD) system is a system that requires synchronization of clocks of base stations. If a clock of a faulty base station is not synchronized with a clock of another base station, for example, out-of-synchronization or a severe offset occurs, downlink data of the base station may interfere with uplink data of the another base station, and downlink data of the another base station may also interfere with uplink data of the base station. This causes severe deterioration of service experience.

In a conventional technology, a base station detects, based on a special detection sequence, whether base stations are synchronized. If the special detection sequence is detected through mutual detection of the base stations, it indicates that the two base stations are synchronized.

However, when the base station receives external interference or a plurality of faulty base stations exist simultaneously, a case of false detection or missing detection easily occurs during detection based on the special detection sequence.

### SUMMARY

This application provides a communication method, a communication apparatus, and a communication system, to improve detection accuracy of detecting a faulty base station.

A first aspect of this application provides a communication method. The method may be performed by a communication apparatus, or may be performed by a component (such as a processor, a chip, or a chip system) of the communication apparatus, or may be performed by a logical module or software that can implement all or some functions of the communication apparatus. The method includes: A first network device sends first indication information and second indication information. The first indication information indicates a second network device to send an out-of-synchronization detection sequence on a downlink traffic channel. The second indication information indicates a third network device to detect the out-of-synchronization detection sequence to obtain a detection result. The out-of-synchronization detection sequence is used for detecting whether two network devices are out of synchronization. The third network device is a neighboring station of the second network device. There are a plurality of third network devices. The first network device determines a faulty network device based on the detection result.

In the first aspect, when the first network device needs to detect the faulty network device, the first network device may indicate the second network device to send the out-of-synchronization detection sequence on the downlink traffic channel, and indicate the third network device adjacent to the second network device to detect the out-of-synchronization detection sequence. If the out-of-synchronization detection sequence is detected, it indicates that the second network device and the third network device are out of synchronization, and the first network device may determine the faulty network device based on the detection result of the third network device. This resolves a problem that it is easy to incorrectly determine that base stations are out of synchronization due to missing detection when a synchronization detection sequence is detected, and improves detection accuracy of detecting a faulty base station.

In a possible implementation, the method further includes: The first network device obtains a fault event. The fault event is reported by the second network device and the third network device. The first network device determines the second network device based on the fault event.

In the foregoing possible implementation, the first network device may further obtain, based on a monitoring result of a working status of the first network device, fault events reported by other network devices, and then summarize these fault events and select a network device with a high fault probability as the second network device, to avoid simultaneously detecting all network devices, and reduce detection consumption.

In a possible implementation, the third network device is determined based on the second network device with reference to a selection condition, and the selection condition includes a plurality of items of a geographical location, a clock topology, a routing topology, and a neighbor relationship.

In a possible implementation, the foregoing step in which the first network device determines a faulty network device based on the detection result includes: The first network device divides second network devices and the third network devices into a plurality of synchronization groups based on the detection result. Each synchronization group includes a second network device and a third network device that are clock-synchronized. The first network device determines a reference group based on preset weights and a quantity that are of network devices in each of the plurality of synchronization groups according to a preset condition. The first network device determines a faulty group from the plurality of synchronization groups based on the reference group. A network device in the faulty group is the faulty network device.

In the foregoing possible implementation, the first network device may obtain a synchronization relationship between the second network device and the third network device based on the detection result of the third network device, divide the plurality of second network devices and the plurality of third network devices into the plurality of synchronization groups, and then select, from the plurality of synchronization groups as the reference group, a synchronization group with preset weights and a quantity that are of network devices meeting the preset condition. That is, a group other than the reference group in the plurality of synchronization groups is the faulty group, and the network device in the faulty group is the faulty network device. This improves feasibility of the solution.

In a possible implementation, the first indication information further indicates the second network device to send a synchronization detection sequence, the second indication information further indicates the third network device to detect the synchronization detection sequence, the detection result includes a result of detecting the synchronization detection sequence by the third network device, and the synchronization detection sequence is used for detecting whether two network devices are synchronized.

In the foregoing possible implementation, the first network device may further indicate the second network device to send the synchronization detection sequence, and indicate the third network device to detect the synchronization detection sequence. The third network device may simultaneously feed back results of detecting the synchronization detection sequence and the out-of-synchronization detection sequence, so that accuracy of detecting a synchronous network device can be improved.

A second aspect of embodiments of this application provides a communication method. The method may be performed by a communication apparatus, or may be performed by a component (such as a processor, a chip, or a chip system) of the communication apparatus, or may be performed by a logical module or software that can implement all or some functions of the communication apparatus. The method includes: A second network device obtains first indication information. The first indication information indicates to send an out-of-synchronization detection sequence. The out-of-synchronization detection sequence is used for detecting whether two network devices are out of synchronization. The second network device sends the out-of-synchronization detection sequence on a downlink traffic channel based on the first indication information.

In the second aspect, the second network device may deliver the out-of-synchronization detection sequence on the downlink traffic channel based on the first indication information from a first network device, so that a network device adjacent to the second network device detects whether the network device adjacent to the second network device and the second network device are out of synchronization, and the first network device may determine a faulty network device, to improve detection accuracy of detecting a faulty base station.

In a possible implementation, the first indication information further indicates to send a synchronization detection sequence, and the synchronization detection sequence is used for detecting whether two network devices are synchronized.

A third aspect of this application provides a communication method. The method may be performed by a communication apparatus, or may be performed by a component (such as a processor, a chip, or a chip system) of the communication apparatus, or may be performed by a logical module or software that can implement all or some functions of the communication apparatus. The method includes: A third network device obtains second indication information. The second indication information indicates to detect an out-of-synchronization detection sequence. The out-of-synchronization detection sequence is used for detecting whether two network devices are out of synchronization. The third network device detects the out-of-synchronization detection sequence based on the second indication information, and obtains a detection result. The third network device sends the detection result to a first network device.

In the third aspect, the third network device may detect the out-of-synchronization detection sequence on a downlink traffic channel based on the second indication information from the first network device, to determine whether the third network device and a second network device that is described in the out-of-synchronization detection sequence are out of synchronization, and feed back the detection result to the first network device, so that the first network device can determine a faulty network device, to improve detection accuracy of detecting a faulty base station.

In a possible implementation, the second indication information further indicates to detect a synchronization detection sequence, the synchronization detection sequence is from a second network device, and the synchronization detection sequence is used for detecting whether two network devices are synchronized.

A fourth aspect of this application provides a communication apparatus. The communication apparatus includes: a sending unit, configured to send first indication information and second indication information, where the first indication information indicates a second network device to send an out-of-synchronization detection sequence on a downlink traffic channel, the second indication information indicates a third network device to detect the out-of-synchronization detection sequence to obtain a detection result, the out-of-synchronization detection sequence is used for detecting whether two network devices are out of synchronization, the third network device is a neighboring station of the second network device, and there are a plurality of third network devices; and a determining unit, configured to determine a faulty network device based on the detection result.

The communication apparatus is configured to perform the method in any one of the first aspect or the implementations of the first aspect.

A fifth aspect of this application provides a communication apparatus. The communication apparatus includes: an obtaining unit, configured to obtain first indication information, where the first indication information indicates to send an out-of-synchronization detection sequence, and the out-of-synchronization detection sequence is used for detecting whether two network devices are out of synchronization; and a sending unit, configured to send the out-of-synchronization detection sequence on a downlink traffic channel based on the first indication information.

The communication apparatus is configured to perform the method in any one of the second aspect or the implementations of the second aspect.

A sixth aspect of this application provides a communication apparatus. The communication apparatus includes: an obtaining unit, configured to obtain second indication information, where the second indication information indicates to detect an out-of-synchronization detection sequence, and the out-of-synchronization detection sequence is used for detecting whether two network devices are out of synchronization; a detection unit, configured to detect the out-of-synchronization detection sequence based on the second indication information, and obtain a detection result; and a sending unit, configured to send the detection result to a first network device.

The communication apparatus is configured to perform the method in any one of the third aspect or the implementations of the third aspect.

A seventh aspect of this application provides a communication device, including: a processor, a memory, and a communication interface. The processor is configured to execute instructions stored in the memory, to enable the communication device to perform the method provided in any one of the first aspect or the optional manners of the first aspect. The communication interface is configured to receive or send an indication. For specific details of the communication device provided in the seventh aspect, refer to any one of the first aspect or the optional manners of the first aspect. Details are not described herein again.

An eighth aspect of this application provides a communication device, including: a processor, a memory, and a communication interface. The processor is configured to execute instructions stored in the memory, to enable the communication device to perform the method provided in any one of the second aspect or the optional manners of the second aspect. The communication interface is configured to receive or send an indication. For specific details of the communication device provided in the eighth aspect, refer to any one of the second aspect or the optional manners of the second aspect. Details are not described herein again.

A ninth aspect of this application provides a communication device, including: a processor, a memory, and a communication interface. The processor is configured to execute instructions stored in the memory, to enable the communication device to perform the method provided in any one of the third aspect or the optional manners of the third aspect. The communication interface is configured to receive or send an indication. For specific details of the communication device provided in the ninth aspect, refer to any one of the third aspect or the optional manners of the third aspect. Details are not described herein again.

A tenth aspect of this application provides a computer-readable storage medium. The computer-readable storage medium stores a program. When executing the program, a computer performs the method provided in any one of the first aspect or the optional manners of the first aspect.

An eleventh aspect of this application provides a computer-readable storage medium. The computer-readable storage medium stores a program. When executing the program, a computer performs the method provided in any one of the second aspect or the optional manners of the second aspect.

A twelfth aspect of this application provides a computer-readable storage medium. The computer-readable storage medium stores a program. When executing the program, a computer performs the method provided in any one of the third aspect or the optional manners of the third aspect.

A thirteenth aspect of this application provides a computer program product. When the computer program product is executed on a computer, the computer performs the method provided in any one of the first aspect or the optional manners of the first aspect.

A fourteenth aspect of this application provides a computer program product. When the computer program product is executed on a computer, the computer performs the method provided in any one of the second aspect or the optional manners of the second aspect.

A fifteenth aspect of this application provides a computer program product. When the computer program product is executed on a computer, the computer performs the method provided in any one of the third aspect or the optional manners of the third aspect.

A sixteenth aspect of this application provides a communication system, including the communication apparatus in any optional manner of the fourth aspect, the fifth aspect, or the sixth aspect.

Optionally, the communication system may further include a terminal device.

### BRIEF DESCRIPTION OF DRAWINGS

FIG. 1 is a diagram of an architecture of a communication system according to an embodiment of this application;
FIG. 2 is a schematic diagram of an embodiment of a communication method according to an embodiment of this application;
FIG. 3 is a schematic diagram of selection of a neighboring base station according to an embodiment of this application;
FIG. 4 is a schematic diagram of out-of-synchronization detection according to an embodiment of this application;
FIG. 5 is a schematic diagram of synchronization detection according to an embodiment of this application;
FIG. 6 is a schematic diagram of an embodiment of a communication apparatus according to an embodiment of this application;
FIG. 7 is a schematic diagram of another embodiment of a communication apparatus according to an embodiment of this application;
FIG. 8 is a schematic diagram of another embodiment of a communication apparatus according to an embodiment of this application;
FIG. 9 is a schematic diagram of a structure of a communication device according to an embodiment of this application;
FIG. 10 is a schematic diagram of another structure of a communication device according to an embodiment of this application; and
FIG. 11 is a schematic diagram of another structure of a communication device according to an embodiment of this application.

### DESCRIPTION OF EMBODIMENTS

Embodiments of this application provide a communication method, a communication apparatus, and a communication system, to improve detection accuracy of detecting a faulty base station.

The following describes embodiments of this application with reference to the accompanying drawings. Clearly, the described embodiments are merely some rather than all of embodiments of this application. A person of ordinary skill in the art may know that with development of technologies and emergence of a new scenario, the technical solutions provided in embodiments of this application are also applicable to similar technical problems.

In the specification, claims, and accompanying drawings of this application, the terms "first", "second", and so on are intended to distinguish between similar objects but do not necessarily indicate a specific order or sequence. It should be understood that data termed in such a way is interchangeable in proper circumstances, so that embodiments described herein can be implemented in other orders than the order illustrated or described herein. In addition, the terms "include" and "have" and any other variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The specific term "example" herein means "used as an example, embodiment, or illustration". Any embodiment described as an "example" is not necessarily explained as being superior or better than other embodiments.

In addition, to better describe this application, numerous specific details are given in the following specific implementations. A person skilled in the art should understand that this application may also be implemented without some specific details. In some examples, methods, means, elements, and circuits that are well known by a person skilled in the art are not described in detail, so that a main purpose of this application is highlighted.

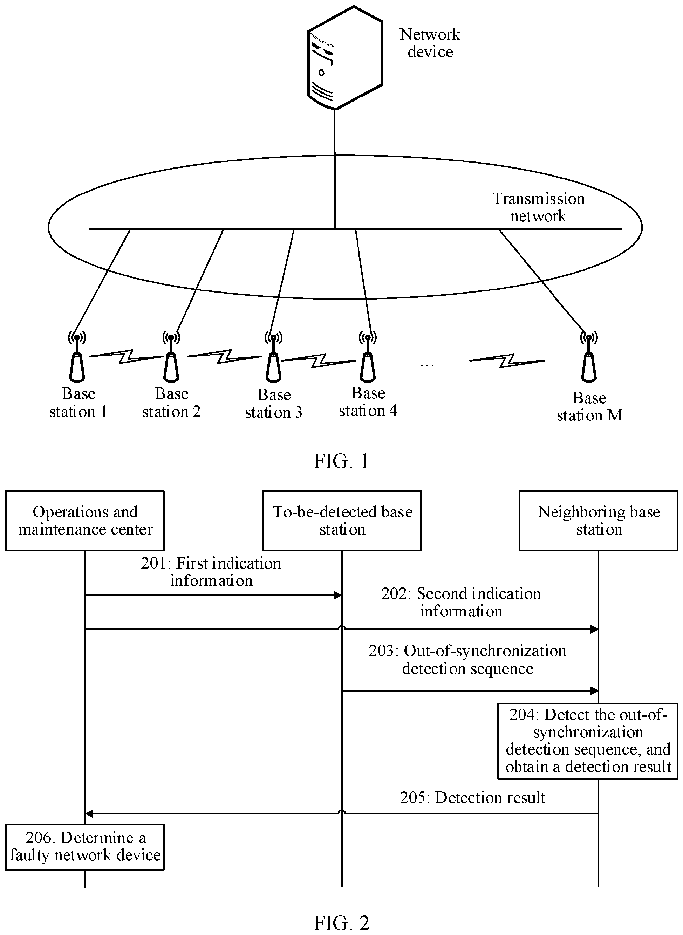

The technical solutions provided in this application are applied to a communication system shown in FIG. 1. The communication system includes M base stations, data may be transmitted between the M base stations through an air interface, M is greater than 1, and each of the M base stations has at least one neighboring station in the M base stations. For example, as shown in FIG. 1, the M base stations include a base station 1, a base station 2, a base station 3, a base station 4, ..., and a base station M. For example, the base station 1 has two neighboring stations: the base station 2 and the base station 3. The base station 2 has one neighboring station, which is the base station 1. The base station 3 has two neighboring stations: the base station 1 and the base station 4. The base station 4 has one neighboring station, which is the base station 3.

Optionally, the communication system may further include a network device, and the network device is separately connected to four base stations. A terminal device may communicate with one or more of the four base stations in FIG. 1 through an air interface.

A base station is a network element device configured to provide a wireless service, and includes a building baseband unit (building baseband unit, BBU) and a remote radio unit (remote radio unit, RRU). The BBU is a baseband processing unit configured to provide a base station service, and provide a clock signal of a base station. The RRU is a service unit configured to transmit a radio frequency signal to a surrounding area.

The communication system shown in FIG. 1 may be a communication system that supports a fourth generation (fourth generation, 4G) access technology, for example, a long term evolution (long term evolution, LTE) access technology. Alternatively, the communication system may be a communication system that supports a fifth generation (fifth generation, 5G) access technology, for example, a new radio (new radio, NR) access technology. Alternatively, the communication system may be a communication system that supports a plurality of radio technologies, for example, a communication system that supports an LTE technology and an NR technology. In addition, the communication system may also be applicable to a future-oriented communication technology.

In the communication system shown in FIG. 1, the base station may be an evolved base station (evolved NodeB, eNB) in the communication system that supports the 4G access technology, or a next generation base station (next generation NodeB, gNB), a transmission reception point (transmission reception point, TRP), a relay node (relay node), an access point (access point, AP), or the like in the communication system that supports the 5G access technology.

The network device in this application includes, for example, an access network device and/or a core network device. The access network device is a device having a wireless/wired receiving and sending function, and is configured to communicate with a terminal device. The access network device includes but is not limited to a base station (BTS, NodeB, eNodeB/eNB, or gNodeB/gNB) in the foregoing communication system, a transmission reception point (transmission reception point, TRP), a base station that subsequently evolves in 3 GPP, an access node in a Wi-Fi system, a wireless relay node, a wireless backhaul node, and the like. The base station may be a macro base station, a micro base station, a pico base station, a small cell, a relay station, or the like. A plurality of base stations may support networks using a same access technology mentioned above, or may support networks using different access technologies mentioned above. The base station may include one or more co-site or non-co-site transmission reception points. Alternatively, the network device may be a radio controller, a central unit (central unit, CU), and/or a distributed unit (distributed unit, DU) in a cloud radio access network (cloud radio access network, CRAN) scenario. Alternatively, the network device may be a server, a wearable device, a vehicle-mounted device, or the like. For example, a network device in the V2X technology may be a road side unit (road side unit, RSU). The following describes an example in which the access network device is a base station. A plurality of network devices in the communication system may be base stations of a same type, or may be base stations of different types.

In embodiments of this application, a first network device may be an operations and maintenance center (operations & maintenance center, OMC), which is generally referred to as an element management system, or NMS for short. A second network device may be a to-be-detected base station, and a third network device may be a neighboring base station that may be interfered by.

A current method for detecting a faulty base station is a solution of implementing a function of detecting a clock out-of-synchronization fault by using a result of mutually detecting a synchronization sequence by surrounding triggered base stations. This solution implements, based on periodic results of detecting a synchronization sequence by the base station and the neighboring station, a function of diagnosing the clock out-of-synchronization fault. Specifically, a function of sending and detecting a synchronization sequence signal in a gap (gap) area is used to confirm effect of pairwise synchronization between two base stations. When the two base stations are synchronized and air interface path loss between the base stations is small, the two base stations can mutually detect a synchronization sequence. When the two base stations are out of synchronization, the two base stations cannot mutually detect the synchronization sequence.

When an out-of-synchronization faulty base station causes interference to neighboring synchronous base stations, a signal in a downlink slot of the out-of-synchronization faulty base station causes interference to the neighboring synchronous base stations. As long as no signal is transmitted in the downlink slot of the out-of-synchronization faulty base station, the interference to the neighboring base stations disappears immediately. Based on an association relationship between the out-of-synchronization faulty base station and the surrounding synchronous base stations of the out-of-synchronization faulty base station, the out-of-synchronization base station is enabled to send a group of silence sequences, and the surrounding synchronous base stations simultaneously detect and report change of an interference signal. If a plurality of synchronous base stations simultaneously detect a silence sequence signal, it may be determined that a silent base station is a faulty base station that causes interference to a surrounding base station.

However, this solution is mainly limited by factors such as a resource of a gap of an air interface and an impact of change of an external environment of a base station on a detection result, or a case in which a plurality of clock out-of-synchronization faulty base stations exist in an area. This causes a high false detection rate of a clock out-of-synchronization fault.

To resolve the foregoing problem, this application provides a communication method. The communication method is as follows.

FIG. 2 shows an embodiment of a communication method according to an embodiment of this application.

201: An OMC sends first indication information to a to-be-detected base station.

In embodiments of this application, the to-be-detected base station is a base station with a high fault probability, and there are a plurality of to-be-detected base stations. The OMC may deliver the first indication information to the plurality of to-be-detected base stations. The first indication information may indicate the to-be-detected base station to deliver an out-of-synchronization detection sequence on a downlink traffic channel according to a specific rule. The specific rule may be a specific time interval. If a base station receives the out-of-synchronization detection sequence, it indicates that the base station and the to-be-detected base station are in an out-of-synchronization status. The OMC may determine a synchronization or out-of-synchronization status of the to-be-detected base station and another base station.

Optionally, the OMC may further obtain a fault event, and determine the to-be-detected base station based on the fault event. Specifically, a plurality of base stations that perform network transmission with the OMC may monitor a clock out-of-synchronization fault event based on working statuses of the plurality of base stations, and then the plurality of base stations may report external interference events of the plurality of base stations or status change events of clock modules or components of the plurality of base stations to the OMC. The plurality of base stations include at least the to-be-detected base station and a neighboring base station. The OMC may summarize the events reported by the plurality of base stations, and then select the to-be-detected base station according to a preset rule. The neighboring base station is a neighboring base station that may be interfered by a faulty base station, and there are a plurality of neighboring base stations. The preset rule may be set with reference to a conventional technology, and is not limited herein.

202: The OMC sends second indication information to the neighboring base station.

In embodiments of this application, when sending the first indication information to the to-be-detected base station, the OMC may further send the second indication information to the neighboring base station of the to-be-detected base station. The second indication information may indicate the neighboring base station to detect the out-of-synchronization detection sequence on an uplink traffic channel, and the second indication information may further indicate duration in which the neighboring base station detects the out-of-synchronization detection sequence. When the neighboring base station receives the out-of-synchronization detection sequence, it indicates that the neighboring base station and a base station corresponding to the out-of-synchronization detection sequence are in an out-of-synchronization status. In this way, for two base stations that are out of synchronization, detection accuracy is high, and a capability of resisting external interference is strong.

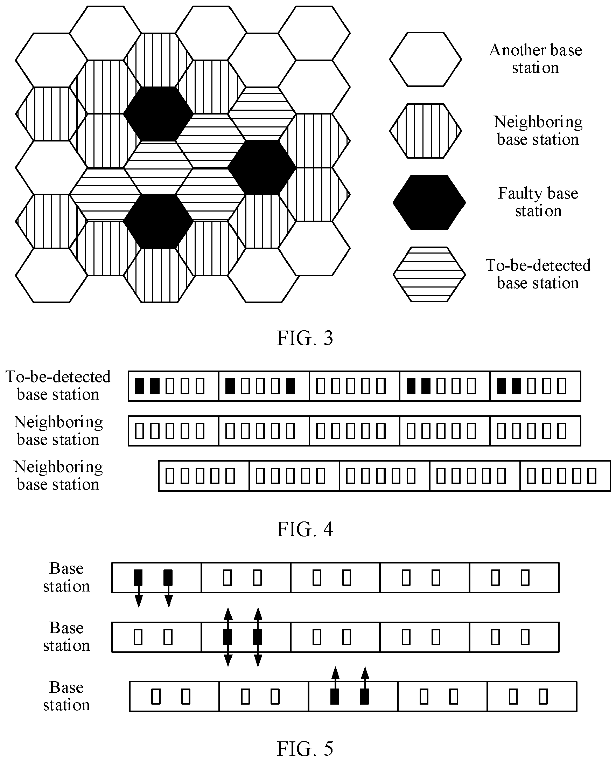

Optionally, the neighboring base station in embodiments of this application may be determined based on the to-be-detected base station with reference to a selection condition. The selection condition may include a plurality of items of a geographical location, a clock topology, and a neighbor relationship. Specifically, the OMC may determine the neighboring base station of the to-be-detected base station based on the geographical location, the clock topology, and a routing topology that are of the to-be-detected base station, or a neighbor relationship between base stations. For example, refer to a schematic diagram of selection of a neighboring base station in FIG. 3. A plurality of base stations are in a cellular cluster structure. A black solid cell is a faulty base station, a horizontally-striped cell is a to-be-detected base station determined by an OMC, a vertically-striped cell is a possible neighboring base station selected based on a selection condition, another base station is represented using a blank cell, and the neighboring base station should be an intra-frequency base station in a same physical area.

In embodiments of this application, a sequence of step 201 and step 202 is not limited.

203: The to-be-detected base station sends the out-of-synchronization detection sequence on the downlink traffic channel based on the first indication information.

In embodiments of this application, after receiving the first indication information, the to-be-detected base station may deliver the out-of-synchronization detection sequence on the downlink traffic channel according to the specific rule and based on the first indication information. Optionally, after delivering the out-of-synchronization detection sequence, the to-be-detected base station may further feed back a sending result to the OMC. To be specific, when the sending result is failed sending, the OMC may re-deliver the first indication information or view a failure cause.

204: The neighboring base station detects the out-of-synchronization detection sequence based on the second indication information, and obtains a detection result.

In embodiments of this application, after receiving the second indication information, the neighboring base station may detect the out-of-synchronization detection sequence in duration indicated by the second indication information, and determine the detection result. Specifically, if the to-be-detected base station and the neighboring base station are synchronized, the out-of-synchronization detection sequence cannot be detected on the uplink traffic channel of the neighboring base station; and if the to-be-detected base station and the neighboring base station are out of synchronization, the out-of-synchronization detection sequence may be detected on the uplink traffic channel of the neighboring base station. The OMC may determine, based on the result of detecting the out-of-synchronization sequence, whether two base stations are not synchronized.

For example, the to-be-detected base station delivers the out-of-synchronization detection sequence on the downlink traffic channel based on the specific rule, and a schematic diagram of out-of-synchronization detection in which the neighboring base station detects the out-of-synchronization detection sequence on the uplink traffic channel is shown in FIG. 4. The to-be-detected base station delivers the out-of-synchronization detection sequence (which is represented using a black block) in a plurality of slots (which are represented using blocks) of the downlink traffic channel. Synchronized neighboring base stations may detect the out-of-synchronization detection sequence in a same slot, and an asynchronous neighboring base station cannot detect the out-of-synchronization detection sequence in the same slot.

205: The neighboring base station sends the detection result to the OMC.

In embodiments of this application, after determining the detection result, the neighboring base stations may respectively feed back detection results to the OMC, so that the OMC summarizes and analyzes all the detection results.

206: The OMC determines a faulty network device based on the detection result.

In embodiments of this application, the OMC may determine a synchronization relationship or an out-of-synchronization relationship between each of the plurality of to-be-detected base stations and each of the plurality of neighboring base stations based on all the detection results, and then use a corresponding out-of-synchronization base station as the faulty network device, that is, a faulty base station, based on a plurality of synchronous base stations with a large amount of data.

Optionally, the OMC may divide the to-be-detected base stations and the neighboring base stations into a plurality of synchronization groups based on the detection result, determine a reference group based on preset weights and a quantity that are of network devices in each of the plurality of synchronization groups according to a preset condition, and determine a faulty group from the plurality of synchronization groups based on the reference group.

Specifically, the OMC may determine, based on the detection result of whether the neighboring base station detects the out-of-synchronization detection sequence, an out-of-synchronization relationship between the neighboring base station and the to-be-detected base station corresponding to the out-of-synchronization detection sequence. To be specific, if the neighboring base station does not detect the out-of-synchronization detection sequence, it indicates that the neighboring base station and the to-be-detected base station corresponding to the out-of-synchronization detection sequence are synchronized, and if the neighboring base station detects the out-of-synchronization detection sequence, it indicates that the neighboring base station and the to-be-detected base station corresponding to the out-synchronization detection sequence are out of synchronization. Correspondingly, the OMC may determine the plurality of synchronization groups. The synchronization group include a to-be-detected base station and a neighboring base station that are clock-synchronized. Base stations in different synchronization groups are in an out-of-synchronization relationship. The OMC may determine the reference group from the plurality of synchronization groups based on the preset condition. The preset condition is that a group with preset weights and a quantity that are of base stations meeting a requirement is selected from the plurality of synchronization groups as the reference group. For example, a synchronization group whose value calculated using a quantity and a preset weight is the largest is determined from the plurality of to-be-detected base stations and the plurality of neighboring base stations as the reference group. The preset weight may be an importance weight preset for each base station. A base station in another synchronization group is an out-of-synchronization base station, that is, the faulty network device, relative to a base station in the reference group.

Optionally, in embodiments of this application, the first indication information may further indicate the to-be-detected base station to deliver a synchronization detection sequence. Correspondingly, the second indication information may further indicate the neighboring base station to detect the synchronization detection sequence. In other words, the detection result fed back by the neighboring base station to the OMC includes both the result of detecting the out-of-synchronization detection sequence and a result of detecting the synchronization detection sequence. The synchronization detection sequence can improve accuracy of detecting a synchronous base station.

Specifically, the synchronization detection sequence may be transmitted in a GP area in an air interface frame of a TDD cell. To be specific, refer to a schematic diagram of synchronization detection shown in FIG. 5. There are one or more special subframes in uplink and downlink transmission of two base stations. The base station may send a synchronization detection sequence (which is represented using a black block in the figure) in a GP area of the special subframe, or the base station may detect a synchronization detection sequence (which is represented using a blank block in the figure) in a GP area of the special subframe. If the two base stations are synchronized and air interface path loss between the base stations is small, the two base stations may mutually detect the synchronization sequence. However, when the two base stations are not synchronized, the two base stations cannot mutually detect the synchronization sequence. Therefore, the OMC may determine, based on the result of detecting the synchronization sequence, whether any two base stations in base stations participating in the detection are synchronized.

In embodiments of this application, when a first network device needs to detect the faulty network device, the first network device may indicate a second network device to send the out-of-synchronization detection sequence on the downlink traffic channel, and indicate a third network device adjacent to the second network device to detect the out-of-synchronization detection sequence. If the out-of-synchronization detection sequence is detected, it indicates that the second network device and the third network device are out of synchronization, and the first network device may determine the faulty network device based on a detection result of the third network device. This resolves a problem that it is easy to incorrectly determine that base stations are out of synchronization due to missing detection when the synchronization detection sequence is detected, and improves detection accuracy of detecting a faulty base station.

Further, the first network device may further indicate the second network device to send the synchronization detection sequence, and indicate the third network device to detect the synchronization detection sequence. The third network device may simultaneously feed back results of detecting the synchronization detection sequence and the out-of-synchronization detection sequence, so that accuracy of detecting a synchronous network device can be improved.

The foregoing describes the communication method. The following describes a communication apparatus according to an embodiment of this application with reference to the accompanying drawings.

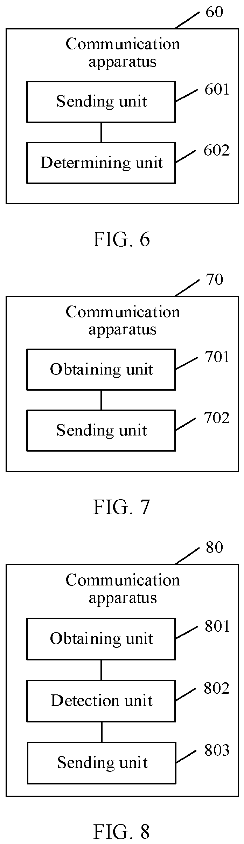

FIG. 6 is a schematic diagram of an embodiment of a communication apparatus 60 according to an embodiment of this application.

As shown in FIG. 6, this embodiment of this application provides a communication apparatus. The communication apparatus includes:
a sending unit 601, configured to send first indication information and second indication information, where the first indication information indicates a second network device to send an out-of-synchronization detection sequence on a downlink traffic channel, the second indication information indicates a third network device to detect the out-of-synchronization detection sequence to obtain a detection result, the out-of-synchronization detection sequence is used for detecting whether two network devices are out of synchronization, the third network device is a neighboring station of the second network device, and there are a plurality of third network devices; and
a determining unit 602, configured to determine a faulty network device based on the detection result.

Optionally, the determining unit 602 is further configured to:
obtain a fault event, where the fault event is reported by the second network device and the third network device; and
determine the second network device based on the fault event.

Optionally, the third network device is determined based on the second network device with reference to a selection condition, and the selection condition includes a plurality of items of a geographical location, a clock topology, a routing topology, and a neighbor relationship.

Optionally, the determining unit 602 is specifically configured to:
divide second network devices and the third network devices into a plurality of synchronization groups based on the detection result, where each synchronization group includes a second network device and a third network device that are clock-synchronized;
determine a reference group based on preset weights and a quantity that are of network devices in each of the plurality of synchronization groups according to a preset condition; and
determine a faulty group from the plurality of synchronization groups based on the reference group, where a network device in the faulty group is the faulty network device.

Optionally, the first indication information further indicates the second network device to send a synchronization detection sequence, the second indication information further indicates the third network device to detect the synchronization detection sequence, the detection result includes a result of detecting the synchronization detection sequence by the third network device, and the synchronization detection sequence is used for detecting whether two network devices are synchronized.

FIG. 7 is a schematic diagram of another embodiment of a communication apparatus 70 according to an embodiment of this application.

As shown in FIG. 7, this embodiment of this application provides a communication apparatus. The communication apparatus includes:
an obtaining unit 701, configured to obtain first indication information, where the first indication information indicates to send an out-of-synchronization detection sequence, and the out-of-synchronization detection sequence is used for detecting whether two network devices are out of synchronization; and
a sending unit 702, configured to send the out-of-synchronization detection sequence on a downlink traffic channel based on the first indication information.

Optionally, the first indication information further indicates to send a synchronization detection sequence, and the synchronization detection sequence is used for detecting whether two network devices are synchronized.

FIG. 8 is a schematic diagram of another embodiment of a communication apparatus 80 according to an embodiment of this application.

As shown in FIG. 8, this embodiment of this application provides a communication apparatus. The communication apparatus includes:
an obtaining unit 801, configured to obtain second indication information, where the second indication information indicates to detect an out-of-synchronization detection sequence, and the out-of-synchronization detection sequence is used for detecting whether two network devices are out of synchronization;
a detection unit 802, configured to detect the out-of-synchronization detection sequence based on the second indication information, and obtain a detection result; and
a sending unit 803, configured to send the detection result to a first network device.

Optionally, the second indication information further indicates to detect a synchronization detection sequence, the synchronization detection sequence is from a second network device, and the synchronization detection sequence is used for detecting whether two network devices are synchronized.

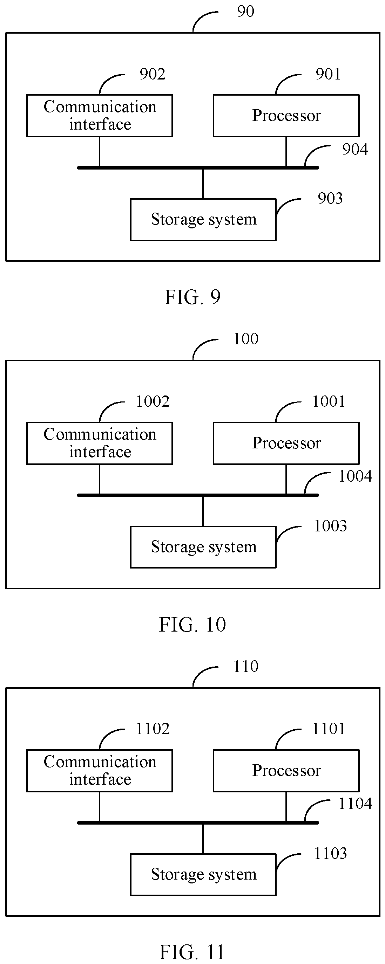

FIG. 9 is a schematic diagram of a possible logical structure of a communication device 90 according to an embodiment of this application. The communication device 90 includes: a processor 901, a communication interface 902, a storage system 903, and a bus 904. The processor 901, the communication interface 902, and the storage system 903 are connected to each other through the bus 904. In embodiments of this application, the processor 901 is configured to control and manage an action of the communication device 90. For example, the processor 901 is configured to perform the steps performed by the OMC in the method embodiments in FIG. 2. The communication interface 902 is configured to support the communication device 90 in performing communication. The storage system 903 is configured to store program code and data that are of the communication device 90.

The processor 901 may be a central processing unit, a general-purpose processor, a digital signal processor, an application-specific integrated circuit, a field programmable gate array or another programmable logic device, a transistor logic device, a hardware component, or any combination thereof. The processor 901 may implement or execute various example logical blocks, modules, and circuits described with reference to content disclosed in this application. The processor 901 may alternatively be a combination for implementing a computing function, for example, a combination including one or more microprocessors or a combination of a digital signal processor and a microprocessor. The bus 904 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used for representation in FIG. 9, but this does not mean that there is only one bus or only one type of bus.

The sending unit 601 in the communication apparatus 60 is equivalent to the communication interface 902 in the communication device 90, and the determining unit 602 in the communication device 60 is equivalent to the processor 901 in the communication device 90.

The communication device 90 in this embodiment may correspond to the OMC in the method embodiments in FIG. 2. The communication interface 902 in the communication device 90 may implement the functions of the OMC in the method embodiments in FIG. 2 and/or various steps implemented by the OMC in the method embodiments in FIG. 2. For brevity, details are not described herein again.

FIG. 10 is a schematic diagram of a possible logical structure of a communication device 100 according to an embodiment of this application. The communication device 100 includes: a processor 1001, a communication interface 1002, a storage system 1003, and a bus 1004. The processor 1001, the communication interface 1002, and the storage system 1003 are connected to each other through the bus 1004. In embodiments of this application, the processor 1001 is configured to control and manage an action of the communication device 100. For example, the processor 1001 is configured to perform the steps performed by the to-be-detected base station in the method embodiments in FIG. 2. The communication interface 1002 is configured to support the communication device 100 in performing communication. The storage system 1003 is configured to store program code and data that are of the communication device 100.

The processor 1001 may be a central processing unit, a general-purpose processor, a digital signal processor, an application-specific integrated circuit, a field programmable gate array or another programmable logic device, a transistor logic device, a hardware component, or any combination thereof. The processing module may implement or execute various example logical blocks, modules, and circuits described with reference to content disclosed in this application. The processor 1001 may alternatively be a combination for implementing a computing function, for example, a combination including one or more microprocessors or a combination of a digital signal processor and a microprocessor. The bus 1004 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used for representation in FIG. 10, but this does not mean that there is only one bus or only one type of bus.

The sending unit 702 in the communication apparatus 70 is equivalent to the communication interface 1002 in the communication device 100, and the obtaining unit 701 in the communication device 70 is equivalent to the processor 1001 in the communication device 100.

The communication device 100 in this embodiment may correspond to the to-be-detected base station in the method embodiments in FIG. 2. The communication interface 1002 in the communication device 100 may implement the functions of the to-be-detected base station in the method embodiments in FIG. 2 and/or various steps implemented by the to-be-detected base station in the method embodiments in FIG. 2. For brevity, details are not described herein again.

FIG. 11 is a schematic diagram of a possible logical structure of a communication device 110 according to an embodiment of this application. The communication device 110 includes: a processor 1101, a communication interface 1102, a storage system 1103, and a bus 1104. The processor 1101, the communication interface 1102, and the storage system 1103 are connected to each other through the bus 1104. In embodiments of this application, the processor 1101 is configured to control and manage an action of the communication device 110. For example, the processor 1101 is configured to perform the steps performed by the neighboring base station in the method embodiments in FIG. 2. The communication interface 1102 is configured to support the communication device 110 in performing communication. The storage system 1103 is configured to store program code and data that are of the communication device 110.

The processor 1101 may be a central processing unit, a general-purpose processor, a digital signal processor, an application-specific integrated circuit, a field programmable gate array or another programmable logic device, a transistor logic device, a hardware component, or any combination thereof. The processing module may implement or execute various example logical blocks, modules, and circuits described with reference to content disclosed in this application. The processor 1101 may alternatively be a combination for implementing a computing function, for example, a combination including one or more microprocessors or a combination of a digital signal processor and a microprocessor. The bus 1104 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one bold line is used for representation in FIG. 11, but this does not mean that there is only one bus or only one type of bus.

The sending unit 803 in the communication apparatus 80 is equivalent to the communication interface 1102 in the communication device 110, and the obtaining unit 801 and the detection unit 802 that are in the communication device 80 are equivalent to the processor 1101 in the communication device 110.

The communication device 110 in this embodiment may correspond to the neighboring base station in the method embodiments in FIG. 2. The communication interface 1102 in the communication device 110 may implement the functions of the neighboring base station in the method embodiments in FIG. 2 and/or various steps implemented by the neighboring base station in the method embodiments in FIG. 2. For brevity, details are not described herein again.

In another embodiment of this application, a computer-readable storage medium is further provided. The computer-readable storage medium stores computer-executable instructions. When a processor of a device executes the computer-executable instructions, the device performs the steps of the communication method performed by the OMC in the method embodiments in FIG. 2.

In another embodiment of this application, a computer-readable storage medium is further provided. The computer-readable storage medium stores computer-executable instructions. When a processor of a device executes the computer-executable instructions, the device performs the steps of the communication method performed by the to-be-detected base station in the method embodiments in FIG. 2.

In another embodiment of this application, a computer-readable storage medium is further provided. The computer-readable storage medium stores computer-executable instructions. When a processor of a device executes the computer-executable instructions, the device performs the steps of the communication method performed by the neighboring base station in the method embodiments in FIG. 2.

In another embodiment of this application, a computer program product is further provided. The computer program product includes computer-executable instructions, and the computer-executable instructions are stored in a computer-readable storage medium. When a processor of a device executes the computer-executable instructions, the device performs the steps of the communication method performed by the OMC in the method embodiments in FIG. 2.

In another embodiment of this application, a computer program product is further provided. The computer program product includes computer-executable instructions, and the computer-executable instructions are stored in a computer-readable storage medium. When a processor of a device executes the computer-executable instructions, the device performs the steps of the communication method performed by the to-be-detected base station in the method embodiments in FIG. 2.

In another embodiment of this application, a computer program product is further provided. The computer program product includes computer-executable instructions, and the computer-executable instructions are stored in a computer-readable storage medium. When a processor of a device executes the computer-executable instructions, the device performs the steps of the communication method performed by the neighboring base station in the method embodiments in FIG. 2.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium, such as a USB flash drive, a removable hard disk, a read-only memory (ROM, read-only memory), a random access memory (RAM, random access memory), a magnetic disk, or an optical disc, that can store program code.

## Claims

1. A communication method, comprising:
sending, by a first network device, first indication information and second indication information, wherein the first indication information indicates a second network device to send an out-of-synchronization detection sequence on a downlink traffic channel, the second indication information indicates a third network device to detect the out-of-synchronization detection sequence to obtain a detection result, the out-of-synchronization detection sequence is used for detecting whether two network devices are out of synchronization, the third network device is a neighboring station of the second network device, and there are a plurality of third network devices; and
determining, by the first network device, a faulty network device based on the detection result.

2. The communication method according to claim 1, further comprising:
obtaining, by the first network device, a fault event, wherein the fault event is reported by the second network device and the third network device; and
determining, by the first network device, the second network device based on the fault event.

3. The communication method according to claim 1 or 2, wherein the third network device is determined based on the second network device with reference to a selection condition, and the selection condition comprises a plurality of items of a geographical location, a clock topology, a routing topology, and a neighbor relationship.

4. The communication method according to any one of claims 1 to 3, wherein the determining, by the first network device, a faulty network device based on the detection result comprises:
dividing, by the first network device, second network devices and the third network devices into a plurality of synchronization groups based on the detection result, wherein each synchronization group comprises a second network device and a third network device that are clock-synchronized;
determining, by the first network device, a reference group based on preset weights and a quantity that are of network devices in each of the plurality of synchronization groups according to a preset condition; and
determining, by the first network device, a faulty group from the plurality of synchronization groups based on the reference group, wherein a network device in the faulty group is the faulty network device.

5. The communication method according to any one of claims 1 to 4, wherein the first indication information further indicates the second network device to send a synchronization detection sequence, the second indication information further indicates the third network device to detect the synchronization detection sequence, the detection result comprises a result of detecting the synchronization detection sequence by the third network device, and the synchronization detection sequence is used for detecting whether two network devices are synchronized.

6. A communication method, comprising:
obtaining, by a second network device, first indication information, wherein the first indication information indicates to send an out-of-synchronization detection sequence, and the out-of-synchronization detection sequence is used for detecting whether two network devices are out of synchronization; and
sending, by the second network device, the out-of-synchronization detection sequence on a downlink traffic channel based on the first indication information.

7. The communication method according to claim 6, wherein the first indication information further indicates to send a synchronization detection sequence, and the synchronization detection sequence is used for detecting whether two network devices are synchronized.

8. A communication method, comprising:
obtaining, by a third network device, second indication information, wherein the second indication information indicates to detect an out-of-synchronization detection sequence, and the out-of-synchronization detection sequence is used for detecting whether two network devices are out of synchronization;
detecting, by the third network device, the out-of-synchronization detection sequence based on the second indication information, and obtaining a detection result; and
sending, by the third network device, the detection result to a first network device.

9. The communication method according to claim 8, wherein the second indication information further indicates to detect a synchronization detection sequence, the synchronization detection sequence is from a second network device, and the synchronization detection sequence is used for detecting whether two network devices are synchronized.

10. A communication apparatus, comprising:
a sending unit, configured to send first indication information and second indication information, wherein the first indication information indicates a second network device to send an out-of-synchronization detection sequence on a downlink traffic channel, the second indication information indicates a third network device to detect the out-of-synchronization detection sequence to obtain a detection result, the out-of-synchronization detection sequence is used for detecting whether two network devices are out of synchronization, the third network device is a neighboring station of the second network device, and there are a plurality of third network devices; and
a determining unit, configured to determine a faulty network device based on the detection result.

11. The communication apparatus according to claim 10, wherein the determining unit is further configured to:
obtain a fault event, wherein the fault event is reported by the second network device and the third network device; and
determine the second network device based on the fault event.

12. The communication apparatus according to claim 10 or 11, wherein the third network device is determined based on the second network device with reference to a selection condition, and the selection condition comprises a plurality of items of a geographical location, a clock topology, a routing topology, and a neighbor relationship.

13. The communication apparatus according to any one of claims 10 to 12, wherein the determining unit is specifically configured to:
divide second network devices and the third network devices into a plurality of synchronization groups based on the detection result, wherein each synchronization group comprises a second network device and a third network device that are clock-synchronized;
determine a reference group based on preset weights and a quantity that are of network devices in each of the plurality of synchronization groups according to a preset condition; and
determine a faulty group from the plurality of synchronization groups based on the reference group, wherein a network device in the faulty group is the faulty network device.

14. The communication apparatus according to any one of claims 10 to 13, wherein the first indication information further indicates the second network device to send a synchronization detection sequence, the second indication information further indicates the third network device to detect the synchronization detection sequence, the detection result comprises a result of detecting the synchronization detection sequence by the third network device, and the synchronization detection sequence is used for detecting whether two network devices are synchronized.

15. A communication apparatus, comprising:
an obtaining unit, configured to obtain first indication information, wherein the first indication information indicates to send an out-of-synchronization detection sequence, and the out-of-synchronization detection sequence is used for detecting whether two network devices are out of synchronization; and
a sending unit, configured to send the out-of-synchronization detection sequence on a downlink traffic channel based on the first indication information.

16. The communication apparatus according to claim 15, wherein the first indication information further indicates to send a synchronization detection sequence, and the synchronization detection sequence is used for detecting whether two network devices are synchronized.

17. A communication apparatus, comprising:
an obtaining unit, configured to obtain second indication information, wherein the second indication information indicates to detect an out-of-synchronization detection sequence, and the out-of-synchronization detection sequence is used for detecting whether two network devices are out of synchronization;
a detection unit, configured to detect the out-of-synchronization detection sequence based on the second indication information, and obtain a detection result; and
a sending unit, configured to send the detection result to a first network device.

18. The communication apparatus according to claim 17, wherein the second indication information further indicates to detect a synchronization detection sequence, the synchronization detection sequence is from a second network device, and the synchronization detection sequence is used for detecting whether two network devices are synchronized.

19. A communication device, comprising: a processor and a memory, wherein
the processor is configured to execute instructions stored in the memory, to enable the communication device to perform the method according to any one of claims 1 to 5.

20. A communication device, comprising: a processor and a memory, wherein
the processor is configured to execute instructions stored in the memory, to enable the communication device to perform the method according to any one of claims 6 and 7.

21. A communication device, comprising: a processor and a memory, wherein
the processor is configured to execute instructions stored in the memory, to enable the communication device to perform the method according to any one of claims 8 and 9.

22. A computer-readable storage medium, wherein the computer-readable storage medium stores a computer program; and when the computer program is run on a computer, the computer is enabled to perform the method according to any one of claims 1 to 9.

23. A computer program product, wherein when the computer program product runs on a computer, the computer performs the method according to any one of claims 1 to 9.
